# EUROPEAN PATENT SPECIFICATION

(11) **EP 3 998 829 B1**
(45) Date of publication and mention of the grant of the patent: **01.04.2026**
(21) Application number: 20836804.3
(22) Date of filing: 09.07.2020
(51) Int. Cl.: H04L 1/18, H04W 74/00, H04W 74/08, H04L 5/00

(54) **RANDOM ACCESS MESSAGE TRANSMISSION METHOD AND DEVICE**
VERFAHREN UND VORRICHTUNG ZUR DIREKTZUGRIFFSNACHRICHTENÜBERTRAGUNG
PROCÉDÉ ET DISPOSITIF DE TRANSMISSION DE MESSAGE D'ACCÈS ALÉATOIRE

(30) Priority: 10.07.2019 CN 201910621482
(43) Date of publication of application: 18.05.2022
(73) Proprietor: Vivo Mobile Communication Co., Ltd., Dongguan, Guangdong 523860 (CN)
(72) Inventor: CHEN, Xiaohang, Dongguan, Guangdong 523860 (CN); SUN, Peng, Dongguan, Guangdong 523860 (CN)
(74) Representative: Chimini, Francesco
(86) International application number: PCT/CN2020/101104
(87) International publication number: WO 2021/004508

(56) References cited:
- CN-A- 104 812 082
- CN-A- 109 392 107
- CN-A- 110 392 442
- US-A1- 2015 016 213
- US-A1- 2015 117 233
- SAMSUNG: "Corrections on PRACH procedure", vol. RAN WG1, no. Athens, Greece; 20180226 - 20180302, 16 February 2018 (2018-02-16), XP051397096, Retrieved from the Internet <URL:http://www.3gpp.org/ftp/tsg%5Fran/WG1%5FRL1/TSGR1%5F92/Docs/> [retrieved on 20180216]
- SHARP: "“PRACH Repetition Level Modelling”", 3GPP TSG-RAN WG2#89BIS, R2-151284, 10 April 2015 (2015-04-10), XP050953010, DOI: 20200819095814X

## Description

### DESCRIPTION

This application claims priority to Chinese Patent Application No. 201910621482.5, filed with the China National Intellectual Property Administration on July 10, 2019 and entitled "RANDOM ACCESS MESSAGE TRANSMISSION METHOD AND DEVICE".

### TECHNICAL FIELD

Embodiments of the present disclosure relate to the field of communications, and in particular, to a random access message transmission method and a device.

### BACKGROUND

A 2-step random access (abbreviated as 2-step random access channel (RACH)) process is introduced in new radio (NR). When initiating a 2-step RACH process, a terminal device needs to send a random access message according to a transmission parameter (for example, a number of repetitions and a redundancy version (RV)) configured by a network device.

In related technologies, the configuration of a transmission parameter is monotonous, and all terminal devices in a cell send a random access message according to a same transmission parameter, resulting in poor flexibility in sending a random access message. This may cause a series of transmission problems. For example, for some terminal devices in the cell, an excessively large number of repetitions, an improper RV, or the like may cause resource waste. However, for some other terminal devices in the cell, an excessively small number of repetitions, an improper RV, or the like may deteriorate transmission performance.

US20150016312A1 discloses that an user equipment (UE) transmits a random access (RA) preamble according to two dimensions, and the two dimensions include a transmission power and a number of RA preamble repetitions. 3GPP draft document "Corrections on PRACH procedure", R1-1801951, Samsung, teaches DCI design for PRACH procedure.

### SUMMARY

Embodiments of the present disclosure provide a random access message transmission method and a device, to resolve the problem of poor transmission flexibility of a random access message.

According to a first aspect, a random access message transmission method is provided and is defined in claim 1.

According to a second aspect, a random access message transmission method is provided and is defined in claim 10.

According to a third aspect, a terminal device is provided and is defined in claim 11.

According to a fourth aspect, a network device is provided and is defined in claim 12.

Further advantageous embodiments of the present disclosure are indicated in the dependent claims.

### BRIEF DESCRIPTION OF DRAWINGS

The accompanying drawings described herein are intended to provide a further understanding of the present disclosure, and constitute a part of the present disclosure. The illustrative embodiments of the present disclosure and descriptions thereof are intended to describe the present disclosure, and do not constitute limitations on the present disclosure. In the accompanying drawings:
FIG. 1 is a schematic flowchart of a random access message transmission method according to an embodiment of the present disclosure;
FIG. 2 is a schematic diagram of a correspondence between a physical uplink shared channel (PUSCH) resource and a preamble resource according to an embodiment of the present disclosure;
FIG. 3 is a schematic diagram of a correspondence between a PUSCH resource and a physical random access channel (PRACH) occasion according to an embodiment of the present disclosure;
FIG. 4 is a schematic diagram of a correspondence between a PUSCH resource element and a preamble resource according to an embodiment of the present disclosure;
FIG. 5 is a schematic flowchart of a random access message transmission method according to another embodiment of the present disclosure;
FIG. 6 is a schematic structural diagram of a terminal device according to an embodiment of the present disclosure;
FIG. 7 is a schematic structural diagram of a network device according to an embodiment of the present disclosure;
FIG. 8 is a schematic structural diagram of a terminal device according to another embodiment of the present disclosure; and
FIG. 9 is a schematic structural diagram of a network device according to another embodiment of the present disclosure.

### DETAILED DESCRIPTION OF EMBODIMENTS

To make the objectives, technical solutions, and advantages of the present disclosure clearer, the following clearly and completely describes the technical solutions in the present disclosure with reference to specific embodiments of the present disclosure and the corresponding accompanying drawings. Apparently, the described embodiments are some rather than all of the embodiments of the present disclosure. The scope of the invention is therefore solely defined by the appended claims.

It should be understood that the technical solutions in the embodiments of the present disclosure may be applied to various communication systems, such as a long term evolution (Long Term Evolution, LTE) system, a LTE frequency division duplex (Frequency Division Duplex, FDD) system, LTE time division duplex (Time Division Duplex, TDD), a universal mobile telecommunications system (Universal Mobile Telecommunication System, UMTS) or a worldwide interoperability for microwave access (Worldwide Interoperability for Microwave Access, WiMAX) communication system, a fifth-generation (5G) system, a new radio (New Radio, NR) system, or a subsequent evolved communication system.

In embodiments of the present disclosure, a terminal device may include but is not limited to a mobile station (Mobile Station, MS), a mobile terminal (Mobile Terminal), a mobile telephone (Mobile Telephone), user equipment (User Equipment, UE), a handset (handset), portable equipment (portable equipment), a vehicle (vehicle), and the like. The terminal device may communicate with one or more core networks by using a radio access network (Radio Access Network, RAN). For example, the terminal device may be a mobile telephone (or referred to as a "cellular" telephone), or a computer having a wireless communication function; or the terminal device may be a portable, pocket-sized, handheld, computer built-in, or in-vehicle mobile apparatus.

In the embodiments of the present disclosure, a network device is an apparatus that is deployed in a radio access network and that is configured to provide a wireless communication function for a terminal device. The network device may be a base station, and the base station may include various forms such as a macro base station, a micro base station, a relay station, or an access point. In systems that use different radio access technologies, devices that have a base station function may have different names. For example, in an LTE network, the network device is referred to as an evolved NodeB (Evolved NodeB, eNB or eNodeB), and in a 3rd Generation (3rd Generation, 3G) network, the network device is referred to as a NodeB (NodeB) or a network device in the subsequent evolved communications system. However, the terms do not constitute a limitation.

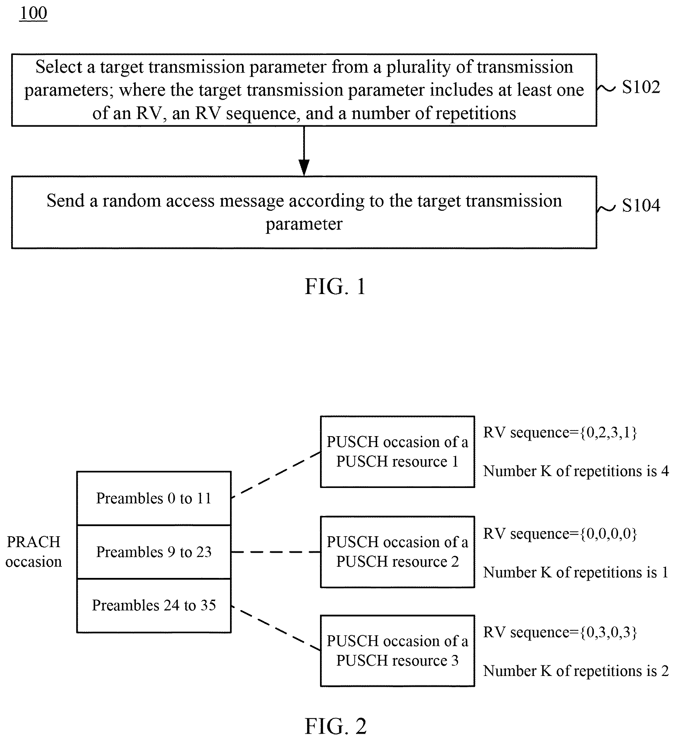

As shown in FIG. 1, an embodiment of the present disclosure provides a random access message transmission method 100. The method may be performed by a terminal device, and includes the following steps.

S102: Select a target transmission parameter from a plurality of transmission parameters; where the target transmission parameter includes at least one of a redundancy version (Redundancy Version, RV), an RV sequence (sequence), and a number of repetitions (repetitions).

This embodiment may be applied in a 2-step RACH process. The 2-step RACH process may be triggered by a network device or a terminal device.

Before the implementation of this embodiment, the network device may configure the plurality of transmission parameters for the terminal device. For example, the network device may configure a plurality of PUSCH resources for sending an msgA for the terminal device. In each PUSCH resource, the network device further indicates a transmission parameter corresponding to the PUSCH resource.

The plurality of PUSCH resources may specifically be PUSCH (transmission) occasions of a plurality of PUSCH resources. Alternatively, the plurality of PUSCH resources may be time-frequency resources of a plurality of PUSCH resources (that is, each PUSCH resource corresponds to time-frequency resources of different positions or sizes).

Optionally, the plurality of PUSCH resources and the plurality of transmission parameters are in a one-to-one correspondence. Certainly, the plurality of PUSCH resources and the plurality of transmission parameters may also be in a many-to-one correspondence.

The plurality of transmission parameters may include a plurality of RVs (or RV sequences, which are similar below), and then in this step, an RV may be selected from a plurality of RVs.

The plurality of transmission parameters may include a plurality of RV sequences, and then in this step, an RV sequence may be selected from a plurality of RV sequences.

The plurality of transmission parameters may include a plurality of numbers of repetitions, and then in this step, a number of repetitions may be selected from the plurality of numbers of repetitions. The selected number K of repetitions may be greater than or equal to 1. When K is equal to 1, it means that no retransmission is performed; when K is greater than 1, it means that K repetitions are performed.

The plurality of transmission parameters include a plurality of RVs (or RV sequences) and a plurality of numbers of repetitions, and then in this step, an RV (or an RV sequence) and a number of repetitions may be selected from the plurality of transmission parameters; or only an RV (or an RV sequence) may be selected from the plurality of transmission parameters; or a number of repetitions may be selected from the plurality of transmission parameters.

In a specific embodiment, the plurality of transmission parameters include a plurality of RVs (or RV sequences) and a plurality of numbers of repetitions, and the target transmission parameter selected in this step also includes an RV (or an RV sequence) and a number of repetitions.

Optionally, in this step, the terminal device may select the target transmission parameter from the plurality of transmission parameters according to at least one of the following:
1) User capability. An example is whether the terminal device has the capability to perform retransmission, which includes: the terminal device has the capability to perform PUSCH data retransmission, or has the capability to perform preamble retransmission. If the terminal device has the capability to perform retransmission, the number K of repetitions may be selected to be greater than 1; if the terminal device does not have the capability to perform retransmission, the number K of repetitions may be selected to be equal to 1, that is, no repetition is performed.
2) Path loss. For example, when the path loss is higher, the terminal device may select a transmission parameter with a greater number of repetitions; on the contrary, when the path loss is lower, the terminal device may select a transmission parameter with a smaller number of repetitions. For another example, when the path loss is high, a self-decodable RV or RV sequence may be selected; and when the path loss is low, a non-self-decodable RV or RV sequence may be selected.
3) Transmit power. For example, when the transmit power is lower, the terminal device may select a transmission parameter with a smaller number of repetitions; on the contrary, when the transmit power is higher, the terminal device may select a transmission parameter with a greater number of repetitions. For another example, when the transmit power is low, a self-decodable RV or RV sequence may be selected; and when the transmit power is high, a non-self-decodable RV or RV sequence may be selected.
4) Size of a transport block to be carried. For example, when the size of a transport block to be carried is larger, the terminal device may select a transmission parameter with a smaller number of repetitions; on the contrary, when the size of a transport block to be carried is smaller, the terminal device may select a transmission parameter with a larger number of repetitions.
5) Priority or type of content to be carried. For example, when the priority of the content to be carried is higher (or the threshold of the type of content to be carried is higher), the terminal device may select a transmission parameter with a larger number of repetitions; on the contrary, when the priority of the content to be carried is lower (or the threshold of the type of content to be carried is lower), the terminal device may select a transmission parameter with a smaller number of repetitions.
6) Next available PUSCH resource. Optionally, the terminal device may use a transmission parameter corresponding to an available PUSCH resource that is closest to a target moment as the target transmission parameter. The target moment may be a triggering moment of a random access process. Certainly, this is not specifically limited in this embodiment.

Optionally, the terminal device may also randomly select a transmission parameter from the plurality of transmission parameters and use the selected transmission parameter as the target transmission parameter.

S104: Send a random access message according to the target transmission parameter.

The random access message (or referred to as an msgA) sent in this step may include a PUSCH, for example, radio resource control (RRC) connection establishment request information, RRC connection recovery request information, and data information. The random access message sent in this step may include both the PUSCH and a PRACH (such as a preamble).

In the random access message transmission method in the embodiments of the present disclosure, the terminal device may select a target transmission parameter from a plurality of transmission parameters in a random access process; where the target transmission parameter includes at least one of an RV, an RV sequence, and a number of repetitions; and send a random access message according to the target transmission parameter. Since the terminal device may select the transmission parameter, transmission flexibility of the random access message is improved, and it is convenient to improve transmission performance of the terminal device.

In the method 100 in the foregoing embodiment, the plurality of transmission parameters are mentioned. Optionally, the network device may configure a plurality of different PUSCH resources for the terminal device. In each PUSCH resource, the network device further indicates a transmission parameter corresponding to the PUSCH resource. That is, in this embodiment, the transmission parameter is configured with a PUSCH resource as the granularity. The plurality of PUSCH resources may specifically be PUSCH transmission occasions of a plurality of PUSCH resources. Optionally, the plurality of PUSCH resources and the plurality of transmission parameters are in a one-to-one correspondence. Certainly, the plurality of PUSCH resources and the plurality of transmission parameters may also be in a many-to-one correspondence.

In this way, the selecting a target transmission parameter from a plurality of transmission parameters in the method 100 in the foregoing embodiment includes: selecting a target PUSCH resource from a plurality of PUSCH resources; and using a transmission parameter corresponding to the target PUSCH resource as the target transmission parameter.

Before the implementation of this embodiment, the terminal device may also receive configuration information, where the configuration information is used to indicate the transmission parameters corresponding to the plurality of PUSCH resources.

In a specific example, the terminal device may receive a plurality of pieces of configuration information, where one piece of configuration information indicates one PUSCH resource and a transmission parameter corresponding to the PUSCH resource.

According to the invention, a transmission parameter corresponding to each of the plurality of PUSCH resources includes at least one of the following:
1) RV or RV sequence of a PUSCH transmitted on the PUSCH resource.
2) Number of repetitions of a PUSCH transmitted on the PUSCH resource.
3) Number of repetitions of a random access preamble corresponding to a PUSCH transmitted on the PUSCH resource.

Optionally, among the plurality of PUSCH resources, different PUSCH resources may correspond to different PRACH resources. For example, any two PUSCH resources correspond to different PRACH resources. The PRACH resource includes at least one of a preamble resource (or a preamble resource group) and a physical random access channel occasion (or a physical random access channel occasion group). The physical random access channel occasion (PRACH Occasion) may also be referred to as a PRACH occasion and is abbreviated as RO. The physical random access channel occasion group may also be referred to as a PRACH occasion group.

Optionally, among the plurality of PUSCH resources, different PUSCH resources may correspond to a same PRACH resource. For example, at least two PUSCH resources correspond to a same PRACH resource. The PRACH resource includes at least one of a preamble resource (or a preamble resource group) and a PRACH occasion (or a PRACH occasion group).

In the method 100 in the foregoing embodiment, the plurality of transmission parameters are mentioned. Optionally, a PUSCH resource configured by the network device for the terminal device may also correspond to a plurality of transmission parameters. Specifically, for example, a PUSCH resource is divided into a plurality of PUSCH resource elements, and a plurality of PUSCH resource elements and a plurality of transmission parameters are in a one-to-one correspondence, or a plurality of PUSCH resource elements and a plurality of transmission parameters are in a many-to-one correspondence. In this embodiment, the transmission parameter is configured with a PUSCH resource element as the granularity.

The PUSCH resource element in each embodiment of this specification may be a demodulation reference signal (Demodulation Reference Signal, DMRS) port; a DMRS sequence; or a DMRS port and DMRS sequence.

In this way, the selecting a target transmission parameter from a plurality of transmission parameters in the method 100 in the foregoing embodiment includes: selecting a target PUSCH resource element from a plurality of PUSCH resource elements of a PUSCH resource; and using a transmission parameter corresponding to the target PUSCH resource element as the target transmission parameter.

Before the implementation of this embodiment, the terminal device may also receive configuration information, where the configuration information is used to indicate transmission parameters corresponding to a plurality of PUSCH resource elements.

In a specific example, the terminal device may receive one piece of configuration information, where this piece of configuration information indicates transmission parameters corresponding to the plurality of PUSCH resource elements of the PUSCH resource.

Optionally, a transmission parameter corresponding to each of the plurality of PUSCH resource elements includes at least one of the following:
1) RV or RV sequence of a PUSCH transmitted on the PUSCH resource element.
2) Number of repetitions of a PUSCH transmitted on the PUSCH resource element.
3) Number of repetitions of a random access preamble corresponding to a PUSCH transmitted on the PUSCH resource element.

Optionally, among the plurality of PUSCH resource elements, different PUSCH resource elements may correspond to different transmission parameters, for example, any two PUSCH resource elements correspond to different transmission parameters.

Optionally, among the plurality of PUSCH resource elements, different PUSCH resource elements may correspond to a same transmission parameter, for example, at least two PUSCH resource elements correspond to a same transmission parameter.

Optionally, any one of the plurality of PUSCH resource elements may correspond to at least one PRACH resource. That is, one PUSCH resource element may correspond to one PRACH resource, or one PUSCH resource element may correspond to a plurality of PRACH resources. The PRACH resource includes at least one of a preamble resource (or a preamble resource group) and a PRACH occasion (or a PRACH occasion group).

In the foregoing several embodiments, it is mentioned that the target transmission parameter is selected from the plurality of transmission parameters. Optionally, the terminal device may autonomously select the target transmission parameter. Optionally, the terminal device may also select the target transmission parameter based on the instruction of the network device.

Before the foregoing plurality of embodiments are implemented, the following step may also be included:
receiving a physical downlink control channel (Physical Downlink Control CHannel, PDCCH), where the PDCCH includes indication information, and the selecting a target transmission parameter from a plurality of transmission parameters includes: selecting the target transmission parameter from the plurality of transmission parameters according to the indication information.

To describe in detail the random access message transmission method provided by the embodiments of the present disclosure, the following describes the random access message transmission method with reference to several specific embodiments.

### Embodiment 1

In this embodiment, the terminal device first receives a plurality of pieces of 2-step RACH configuration information.

Each 2-step RACH configuration information (abbreviated as configuration information) is used to indicate a PUSCH resource, and is also used to indicate an RV (or an RV sequence) used by the terminal device and/or whether to perform retransmission on this PUSCH resource. That is, the number K of repetitions is greater than or equal to 1.

The configuration information is sent by the network device in a broadcast manner, and may also include information about a mapping relationship between a PRACH and a PUSCH.

Among the plurality of PUSCH resources indicated by the plurality of pieces of configuration information, a transmission parameter corresponding to each PUSCH resource may include at least one of the following:
an RV or an RV sequence of a PUSCH transmitted on the PUSCH resource;
a number of repetitions of a PUSCH transmitted on the PUSCH resource; and
a number of repetitions of a random access preamble corresponding to a PUSCH transmitted on the PUSCH resource.

Optionally, among the plurality of PUSCH resources, different PUSCH resources may correspond to different PRACH resources. For example, any two PUSCH resources correspond to different PRACH resources.

Optionally, among the plurality of PUSCH resources, different PUSCH resources may correspond to a same PRACH resource. For example, at least two PUSCH resources correspond to a same PRACH resource.

The PRACH resource includes at least one of a preamble resource (or a preamble resource group) and a PRACH occasion (or a PRACH occasion group).

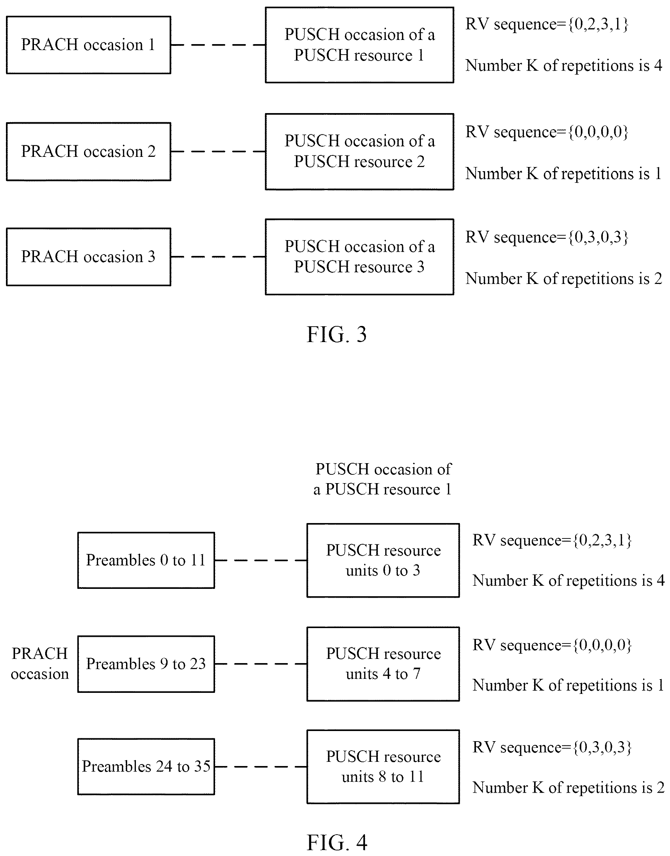

For details, refer to FIG. 2 and FIG. 3. FIG. 2 and FIG. 3 schematically show three PUSCH resources. These three PUSCH resources are PUSCH occasions corresponding to the three PUSCH resources. For details, refer to a PUSCH occasion of a PUSCH resource 1, a PUSCH occasion of a PUSCH resource 2, and a PUSCH occasion of a PUSCH resource 3 in FIG. 2 and FIG. 3.

In FIG. 2 and FIG. 3, a transmission parameter corresponding to the PUSCH occasion of the PUSCH resource 1, that is, a transmission parameter corresponding to the PUSCH resource 1, is: an RV sequence={0,2,3,1} and a number K of repetitions is 4; a transmission parameter corresponding to the PUSCH resource 2 is: an RV sequence={0,0,0,0} and a number K of repetitions is 1; and a transmission parameter corresponding to the PUSCH resource 3 is: an RV sequence={0,3,0,3} and a number K of repetitions is 2.

In FIG. 2, different PUSCH resources may correspond to a same PRACH occasion, that is, the PUSCH resource 1, the PUSCH resource 2, and the PUSCH resource 3 in FIG. 2 may correspond to a same PRACH occasion.

In FIG. 2, different PUSCH resources may correspond to different preamble resources, that is, the PUSCH resource 1 in FIG. 2 corresponds to preambles 0 to 11; the PUSCH resource 2 corresponds to preambles 9 to 23; and the PUSCH resource 3 corresponds to preambles 24 to 35.

In FIG. 3, different PUSCH resources may correspond to different PRACH occasions, that is, the PUSCH resource 1 in FIG. 3 corresponds to a PRACH occasion 1; the PUSCH resource 2 corresponds to a PRACH occasion 2; and the PUSCH resource 3 corresponds to a PRACH occasion 3.

Through the configuration of the plurality of pieces of configuration information, the terminal device selects a PUSCH resource from the plurality of PUSCH resources in the process of initiating random access, and sends a random access message on the PUSCH resource based on the transmission parameter corresponding to the PUSCH resource.

Specifically, the terminal device may select a PUSCH resource from the plurality of PUSCH resources according to at least one of the following:
a user capability;
a path loss;
transmit power;
a size of a transport block to be carried;
a priority or a type of content to be carried; and
a next available PUSCH resource.

Certainly, the terminal may also randomly select a PUSCH resource from the plurality of PUSCH resources.

### Embodiment 2

In this embodiment, the terminal device first receives one or more pieces of 2-step RACH configuration information (abbreviated as configuration information).

If there is one piece of configuration information, the configuration information may be used to indicate a PUSCH resource, and may also be used to indicate an RV (or an RV sequence) used by the terminal device and/or whether to perform retransmission on a plurality of PUSCH resource elements of this PUSCH resource. That is, the number K of repetitions is greater than or equal to 1.

If there are a plurality of pieces of configuration information, these plurality of pieces configuration information may have the same function as that of the above one piece of configuration information, but a PUSCH resource that may be indicated by each piece of configuration information and a plurality of PUSCH resource elements of the PUSCH resource may correspond to different transmission parameters.

The configuration information is sent by the network device in a broadcast manner, and may include information about a mapping relationship between a PRACH and a PUSCH.

A transmission parameter corresponding to each PUSCH resource element may include at least one of the following:
1) RV or RV sequence of a PUSCH transmitted on the PUSCH resource element.
2) Number of repetitions of a PUSCH transmitted on the PUSCH resource element.
3) Number of repetitions of a random access preamble corresponding to a PUSCH transmitted on the PUSCH resource element.

Optionally, among the plurality of PUSCH resource elements, different PUSCH resource elements may correspond to different transmission parameters, for example, any two PUSCH resource elements correspond to different transmission parameters.

Optionally, among the plurality of PUSCH resource elements, different PUSCH resource elements may correspond to a same transmission parameter, for example, at least two PUSCH resource elements correspond to a same transmission parameter.

Optionally, one of the plurality of PUSCH resource elements corresponds to at least one PRACH resource. That is, one PUSCH resource element may correspond to one PRACH resource, or one PUSCH resource element may correspond to a plurality of PRACH resources.

For details, refer to FIG. 4. FIG. 4 schematically shows that the PUSCH occasion of the PUSCH resource 1 includes 12 PUSCH resource elements. For details, refer to PUSCH resource elements 0 to 3, PUSCH resource elements 4 to 7, and PUSCH resources elements 8 to 11 in FIG. 4.

In FIG. 4, a transmission parameter corresponding to the PUSCH resource elements 0 to 3 is: an RV sequence={0,2,3,1} and a number K of repetitions is 4; a transmission parameter corresponding to the PUSCH resource elements 4 to 7 is: an RV sequence={0,0,0,0} and a number K of repetitions is 1; and a transmission parameter corresponding to the PUSCH resources elements 8 to 11 is: an RV sequence={0,3,0,3} and a number K of repetitions is 2.

In FIG. 4, different PUSCH resource elements may correspond to a same PRACH occasion, that is, the PUSCH resource elements 0 to 3, the PUSCH resource elements 4 to 7, and the PUSCH resources elements 8 to 11 in FIG. 4 may correspond to a same PRACH occasion.

In FIG. 4, different PUSCH resource elements may correspond to different preamble resources, that is, the PUSCH resource elements 0 to 3 in FIG. 3 correspond to preambles 0 to 11; the PUSCH resource elements 4 to 7 correspond to preambles 9 to 23; and the PUSCH resources elements 8 to 11 correspond to preambles 24 to 35.

Through the configuration of the configuration information, the terminal device selects a PUSCH resource element from the plurality of PUSCH resource elements in the process of initiating random access, and sends a random access message on the PUSCH resource element based on the transmission parameter corresponding to the PUSCH resource element.

Specifically, the terminal device may select a PUSCH resource element from the plurality of PUSCH resource elements according to at least one of the following:
a user capability;
a path loss;
transmit power;
a size of a transport block to be carried;
a priority or a type of content to be carried; and
a next available PUSCH resource.

Certainly, the terminal device may also randomly select a PUSCH resource element from a plurality of PUSCH resource elements.

### Embodiment 3

The terminal device may receive one or more pieces of configuration information in the manner described in Embodiment 1 or Embodiment 2. For a corresponding configuration process, refer to the description in Embodiment 1 or Embodiment 2.
1. If a 2-step RACH process is triggered by the network device:
   1) The network device may directly indicate to-be-used configuration information to the terminal device through a PDCCH.
   2) The PDCCH includes at least one of a corresponding RV (or RV sequence) and a number of repetitions.
   3) In a manner similar to that in Embodiment 1 or Embodiment 2, the terminal device autonomously selects a transmission parameter.
2. If a 2-step RACH process is triggered by the terminal device:

In a manner similar to that in Embodiment 1 or Embodiment 2, the terminal device autonomously selects a transmission parameter.

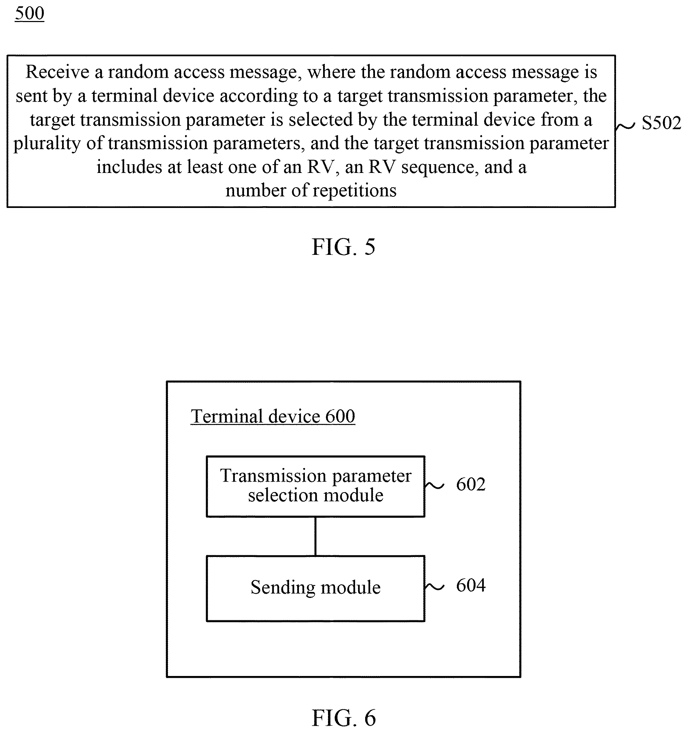

The random access message transmission method according to the embodiments of the present disclosure is described above in detail with reference to FIG. 1 to FIG. 4. A random access message transmission method according to another embodiment of the present disclosure is described in detail below with reference to FIG. 5. It may be understood that the interaction between the network device and the terminal device described on the network device side is the same as that described on the terminal device side in the method shown in FIG. 1. To avoid repetition, relevant descriptions are appropriately omitted.

FIG. 5 is a schematic flowchart of an implementation of a random access message transmission method according to an embodiment of the present disclosure, where the method may be applied to the network device side. As shown in FIG. 5, the method 500 includes:
S502: Receive a random access message.

The random access message is sent by a terminal device according to a target transmission parameter, the target transmission parameter is selected by the terminal device from a plurality of transmission parameters, and the target transmission parameter includes at least one of an RV, an RV sequence, and a number of repetitions.

In the random access message transmission method in the embodiments of the present disclosure, the terminal device may select a target transmission parameter from a plurality of transmission parameters in a random access process; where the target transmission parameter includes at least one of an RV, an RV sequence, and a number of repetitions; and send a random access message according to the target transmission parameter. Since the terminal device may select the transmission parameter, transmission flexibility of the random access message is improved, and it is convenient to improve transmission performance of the terminal device.

Optionally, as an embodiment, the target transmission parameter is a transmission parameter corresponding to a target PUSCH resource selected by the terminal device from a plurality of PUSCH resources; where the plurality of PUSCH resources correspond to a plurality of transmission parameters.

Optionally, as an embodiment, before the receiving a random access message, the method further includes: sending configuration information; where the configuration information is used to indicate transmission parameters corresponding to the plurality of PUSCH resources.

Optionally, as an embodiment, a transmission parameter corresponding to each of the plurality of PUSCH resources includes at least one of the following:
an RV or an RV sequence of a PUSCH;
a number of repetitions of a PUSCH; and
a number of repetitions of a random access preamble corresponding to a PUSCH.

Optionally, as an embodiment, among the plurality of PUSCH resources, PRACH resources corresponding to any two PUSCH resources are different.

Optionally, as an embodiment, the PRACH resource includes a preamble resource and/or a physical random access channel occasion.

Optionally, as an embodiment, the target transmission parameter is a transmission parameter corresponding to a target PUSCH resource element selected by the terminal device from a plurality of PUSCH resource elements of a PUSCH resource; where the plurality of PUSCH resource elements correspond to a plurality of transmission parameters.

Optionally, as an embodiment, before the receiving a random access message, the method further includes: sending configuration information; where the configuration information is used to indicate transmission parameters corresponding to the plurality of PUSCH resource elements.

Optionally, as an embodiment, a transmission parameter corresponding to each of the plurality of PUSCH resource elements includes at least one of the following:
an RV or an RV sequence of a PUSCH;
a number of repetitions of a PUSCH; and
a number of repetitions of a random access preamble corresponding to a PUSCH.

Optionally, as an embodiment, transmission parameters corresponding to any two of the plurality of PUSCH resource elements are different.

Optionally, as an embodiment, one of the plurality of PUSCH resource elements corresponds to at least one PRACH resource.

Optionally, as an embodiment, before the receiving a random access message, the method further includes: sending a PDCCH, where the PDCCH includes indication information and the indication information is used to instruct the terminal device to select the target transmission parameter from the plurality of transmission parameters.

The random access message transmission method according to the embodiments of the present disclosure is described above in detail with reference to FIG. 1 to FIG. 5.

A terminal device according to an embodiment of the present disclosure will be described in detail below with reference to FIG. 6.

FIG. 6 is a schematic structural diagram of a terminal device according to an embodiment of the present disclosure. As shown in FIG. 6, a terminal device 600 includes:
a transmission parameter selection module 602, which may be configured to select a target transmission parameter from a plurality of transmission parameters; where the target transmission parameter includes at least one of an RV, an RV sequence, and a number of repetitions; and
a sending module 604, which may be configured to send a random access message according to the target transmission parameter.

The terminal device provided in the embodiments of the present disclosure may select a target transmission parameter from a plurality of transmission parameters in a random access process; where the target transmission parameter includes at least one of an RV, an RV sequence, and a number of repetitions; and send a random access message according to the target transmission parameter. Since the terminal device may select the transmission parameter, transmission flexibility of the random access message is improved, and it is convenient to improve transmission performance of the terminal device.

Optionally, as an embodiment, the transmission parameter selection module 602 may be configured to select a target PUSCH resource from a plurality of PUSCH resources; and
use a transmission parameter corresponding to the target PUSCH resource as the target transmission parameter;
where the plurality of PUSCH resources correspond to a plurality of transmission parameters.

Optionally, as an embodiment, the terminal device 600 further includes a receiving module, which may be configured to:
receive configuration information;
where the configuration information is used to indicate transmission parameters corresponding to the plurality of PUSCH resources.

Optionally, as an embodiment, a transmission parameter corresponding to each of the plurality of PUSCH resources includes at least one of the following:
an RV or an RV sequence of a PUSCH;
a number of repetitions of a PUSCH; and
a number of repetitions of a random access preamble corresponding to a PUSCH.

Optionally, as an embodiment, among the plurality of PUSCH resources, PRACH resources corresponding to any two PUSCH resources are different.

Optionally, as an embodiment, the PRACH resource includes a preamble resource and/or a physical random access channel occasion.

Optionally, as an embodiment, the transmission parameter selection module 602 may be configured to select a target PUSCH resource element from a plurality of PUSCH resource elements of a PUSCH resource; and
use a transmission parameter corresponding to the target PUSCH resource element as the target transmission parameter;
where the plurality of PUSCH resource elements correspond to a plurality of transmission parameters.

Optionally, as an embodiment, the terminal device 600 further includes a receiving module, which may be configured to:
receive configuration information;
where the configuration information is used to indicate transmission parameters corresponding to the plurality of PUSCH resource elements.

Optionally, as an embodiment, a transmission parameter corresponding to each of the plurality of PUSCH resource elements includes at least one of the following:
an RV or an RV sequence of a PUSCH;
a number of repetitions of a PUSCH; and
a number of repetitions of a random access preamble corresponding to a PUSCH.

Optionally, as an embodiment, transmission parameters corresponding to any two of the plurality of PUSCH resource elements are different.

Optionally, as an embodiment, one of the plurality of PUSCH resource elements corresponds to at least one PRACH resource.

Optionally, as an embodiment, the transmission parameter selection module 602 may be configured to select the target transmission parameter from the plurality of transmission parameters according to at least one of the following:
a user capability;
a path loss;
transmit power;
a size of a transport block to be carried;
a priority or a type of content to be carried; and
a next available PUSCH resource.

Optionally, as an embodiment, the terminal device 600 further includes a receiving module, which may be configured to:
receive a PDCCH, where the PDCCH includes indication information;
where the selecting a target transmission parameter from a plurality of transmission parameters includes: selecting the target transmission parameter from the plurality of transmission parameters according to the indication information.

For the terminal device 600 according to the embodiments of the present disclosure, refer to the procedure corresponding to the method 100 according to the embodiment of the present disclosure. Furthermore, each unit/module of the terminal device 600 and the foregoing other operations and/or functions are used to implement the corresponding procedure of the method 100, may achieve the same or equivalent technical effect, and will no longer be described here for the purpose of brevity.

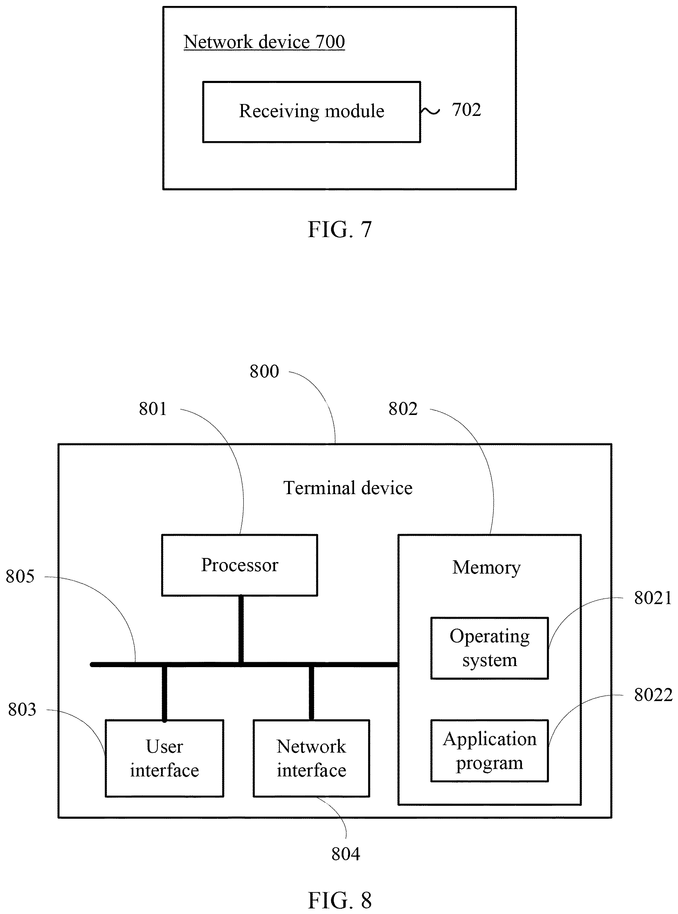

FIG. 7 is a schematic structural diagram of a network device according to an embodiment of the present disclosure. As shown in FIG. 7, the network device 700 includes:
a receiving module 702, which may be configured to receive a random access message;
where the random access message is sent by a terminal device according to a target transmission parameter, the target transmission parameter is selected by the terminal device from a plurality of transmission parameters, and the target transmission parameter includes at least one of an RV, an RV sequence, and a number of repetitions.

The embodiments of the present disclosure provide the network device. The network device may select a target transmission parameter from a plurality of transmission parameters in a random access process; where the target transmission parameter includes at least one of an RV, an RV sequence, and a number of repetitions; and send a random access message according to the target transmission parameter. Since the terminal device may select the transmission parameter, transmission flexibility of the random access message is improved, and it is convenient to improve transmission performance of the terminal device.

Optionally, as an embodiment, the target transmission parameter is a transmission parameter corresponding to a target PUSCH resource selected by the terminal device from a plurality of PUSCH resources; where the plurality of PUSCH resources correspond to a plurality of transmission parameters.

Optionally, as an embodiment, the network device 700 further includes a sending module, which may be configured to: send configuration information; where the configuration information is used to indicate transmission parameters corresponding to the plurality of PUSCH resources.

Optionally, as an embodiment, a transmission parameter corresponding to each of the plurality of PUSCH resources includes at least one of the following:
an RV or an RV sequence of a PUSCH;
a number of repetitions of a PUSCH; and
a number of repetitions of a random access preamble corresponding to a PUSCH.

Optionally, as an embodiment, among the plurality of PUSCH resources, PRACH resources corresponding to any two PUSCH resources are different.

Optionally, as an embodiment, the PRACH resource includes a preamble resource and/or a physical random access channel occasion.

Optionally, as an embodiment, the target transmission parameter is a transmission parameter corresponding to a target PUSCH resource element selected by the terminal device from a plurality of PUSCH resource elements of a PUSCH resource; where the plurality of PUSCH resource elements correspond to a plurality of transmission parameters.

Optionally, as an embodiment, the network device 700 further includes a sending module, which may be configured to: send configuration information; where the configuration information is used to indicate transmission parameters corresponding to the plurality of PUSCH resource elements.

Optionally, as an embodiment, a transmission parameter corresponding to each of the plurality of PUSCH resource elements includes at least one of the following:
an RV or an RV sequence of a PUSCH;
a number of repetitions of a PUSCH; and
a number of repetitions of a random access preamble corresponding to a PUSCH.

Optionally, as an embodiment, transmission parameters corresponding to any two of the plurality of PUSCH resource elements are different.

Optionally, as an embodiment, one of the plurality of PUSCH resource elements corresponds to at least one PRACH resource.

Optionally, as an embodiment, the network device 700 further includes a sending module, which may be configured to send a PDCCH, where the PDCCH includes indication information; and the indication information is used to instruct the terminal device to select the target transmission parameter from the plurality of transmission parameters.

For the network device 700 according to the embodiment of the present disclosure, refer to the procedure corresponding to the method 500 according to the embodiment of the present disclosure. Furthermore, each unit/module of the network device 700 and the foregoing other operations and/or functions are used to implement the corresponding procedure of the method 500, may achieve the same or equivalent technical effect, and will no longer be described here for the purpose of brevity.

FIG. 8 is a block diagram of a terminal device according to another embodiment of the present disclosure. The terminal device 800 shown in FIG. 8 includes: at least one processor 801, a memory 802, at least one network interface 804, and a user interface 803. Various components of the terminal device 800 are coupled by using a bus system 805. It can be understood that the bus system 805 is configured to implement connection and communication between these components. In addition to a data bus, the bus system 805 further includes a power bus, a control bus, and a status signal bus. However, for clarity of description, various buses are marked as the bus system 805 in FIG. 8.

The user interface 803 may include a display, a keyboard, a clicking device (for example, a mouse or a trackball), a touch panel, or a touchscreen.

It may be understood that the memory 802 in this embodiment of the present disclosure may be a volatile memory or a nonvolatile memory, or may include both a volatile memory and a nonvolatile memory. The non-volatile memory is a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SL DRAM), and a direct rambus random access memory (Direct Rambus RAM, DR RAM). The memory 802 in the system and the method that are described in the embodiments of the present disclosure is intended to include but is not limited to these and any other suitable types of memories.

In some implementations, the memory 802 stores the following elements: executable modules or data structures, a subset thereof, or an extended set thereof: an operating system 8021 and an application program 8022.

The operating system 8021 includes various system programs, such as a framework layer, a core library layer, and a driver layer, and is configured to implement various basic services and process hardware-based tasks. The application program 8022 includes various application programs, for example, a media player (Media Player) and a browser (Browser), and is configured to implement various application services. A program implementing the method in the embodiments of the present disclosure may be included in the application program 8022.

In this embodiment of the present disclosure, the terminal device 800 further includes a computer program stored in the memory 802 and executable on the processor 801, and when the computer program is executed by the processor 801, the steps of the method 100 are implemented.

The method disclosed in the embodiments of the present disclosure may be applied to the processor 801 or implemented by the processor 801. The processor 801 may be an integrated circuit chip having a signal processing capability. During implementation, each step of the foregoing method may be completed by using an integrated logic circuit of hardware in the processor 801 or an instruction in a form of software. The above processor 801 may be a general-purpose processor, a digital signal processor (Digital Signal Processor, DSP), an application specific integrated circuit (Application Specific Integrated Circuit, ASIC), a field programmable gate array (Field Programmable Gate Array, FPGA) or other programmable logic devices, a discrete gate or transistor logic device, and a discrete hardware component. The processor 801 may implement or perform the methods, the steps, and logical block diagrams that are disclosed in the embodiments of the present disclosure. The general-purpose processor may be a microprocessor or may be any conventional processor or the like. Steps of the methods disclosed with reference to the embodiments of the present disclosure may be directly executed and accomplished through a hardware decoding processor, or may be executed and accomplished by using a combination of hardware and software modules in the decoding processor. The software module may be located in a mature computer-readable storage medium in this field such as a random access memory, a flash memory, a read-only memory, a programmable read-only memory or an electrically erasable programmable memory, or a register. The computer-readable storage medium is located in the memory 802, and the processor 801 reads information in the memory 802 and completes the steps in the foregoing method in combination with hardware of the processor 801. Specifically, the computer-readable storage medium stores a computer program, and when the computer program is executed by the processor 801, the steps of the foregoing embodiment of method 100 are performed.

It can be understood that those embodiments described in the embodiments of the present disclosure may be implemented with hardware, software, firmware, middleware, microcode, or a combination thereof. For implementation with hardware, a processing unit may be implemented in one or more application specific integrated circuits (Application Specific Integrated Circuits, ASIC), a digital signal processor (Digital Signal Processing, DSP), a digital signal processing device (DSP Device, DSPD), a programmable logic device (Programmable Logic Device, PLD), a field-programmable gate array (Field-Programmable Gate Arrays, FPGA), general processors, controllers, micro-controllers, microprocessors, and another electronic unit for implementing the functions of the present disclosure, or their combinations.

For software implementation, the technology in the embodiments of the present disclosure may be implemented through modules (for example, procedures or functions) that perform the functions in the embodiments of the present disclosure. Software code may be stored in a memory and executed by a processor. The memory may be implemented inside or outside the processor.

The terminal device 800 may implement each process implemented by the terminal device in the foregoing embodiments, and can achieve the same or equivalent technical effect. To avoid repetition, details are not described herein again.

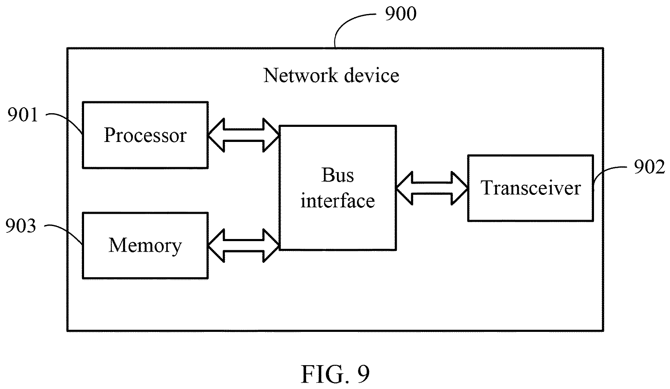

Referring to FIG. 9, FIG. 9 is a structural diagram of a network device to which an embodiment of the present disclosure is applied. The network device may implement details of the embodiment of the method 500, and achieve a same effect. As shown in FIG. 9, a network device 900 includes a processor 901, a transceiver 902, a memory 903, and a bus interface.

In this embodiment of the present disclosure, the network device 900 further includes: a computer program stored in the memory 903 and executable on the processor 901. When the computer program is executed by the processor 901, the steps of the method 500 are implemented.

In FIG. 9, a bus architecture may include any quantity of interconnected buses and bridges, which are specifically connected together by circuits of one or more processors represented by the processor 901 and a memory represented by the memory 903. The bus architecture may further link various other circuits such as a peripheral device, a voltage regulator, and a power management circuit together. These are all well-known in the art, and therefore are not further described in this specification. The bus interface provides an interface. The transceiver 902 may be a plurality of components. To be specific, the transceiver 902 includes a transmitter and a receiver, and provides a unit configured to communicate with various other apparatuses on a transmission medium.

The processor 901 is responsible for bus architecture management and general processing. The memory 903 may store data used by the processor 901 when the processor 901 performs an operation.

The embodiments of the present disclosure further provide a computer-readable storage medium. The computer-readable storage medium stores a computer program, and when a processor executes the computer program, the processes of the embodiments of the foregoing methods 100 and 500 are implemented and the same technical effect can be achieved. To avoid repetition, details are not described herein again. The computer readable storage medium is, for example, a read-only memory (Read-Only Memory, ROM for short), a random access memory (Random Access Memory, RAM for short), a magnetic disk, or an optical disk.

It should be noted that, in this specification, the terms "include", "comprise", or any of their variants are intended to cover a non-exclusive inclusion, such that a process, a method, an article, or an apparatus that includes a list of elements not only includes those elements but also includes other elements that are not expressly listed, or further includes elements inherent to such a process, method, article, or apparatus. In the absence of more limitations, an element defined by "including a ..." does not preclude the existence of other identical elements in the process, method, article, or apparatus that includes the element.

According to the foregoing descriptions of the implementations, a person skilled in the art may clearly understand that the foregoing methods in the embodiments may be implemented by using software and a required universal hardware platform, or certainly may be implemented by using hardware. However, in many cases, the former is a better implementation. Based on such an understanding, the technical solutions of the present disclosure essentially or the part contributing to the related art may be implemented in a form of a software product. The computer software product is stored in a storage medium (such as a ROM/RAM, a hard disk, or a compact disc), and includes several instructions for instructing a terminal (which may be a mobile phone, a computer, a server, an air conditioner, a network device, or the like) to perform the method described in the embodiments of the present disclosure.

The embodiments of the present disclosure are described above with reference to the accompanying drawings, but the present disclosure is not limited to the foregoing specific implementations. The foregoing specific implementations are merely exemplary instead of restrictive. The scope of the invention is defined by the appended claims.

## Claims

1. A random access message transmission method, wherein the method is performed by a terminal device, and the method comprises:
selecting (S102) a target transmission parameter from a plurality of transmission parameters;
wherein the target transmission parameter comprises at least one of a redundancy version, RV, an RV sequence, and a number of repetitions; wherein
the selecting (S102) a target transmission parameter from a plurality of transmission parameters comprises:
selecting a target physical uplink shared channel, PUSCH, resource from a plurality of PUSCH resources; and
using a transmission parameter corresponding to the target PUSCH resource as the target transmission parameter; wherein
the plurality of PUSCH resources correspond to a plurality of transmission parameters;
and sending (S104) a random access message according to the target transmission parameter on the target PUSCH resource; or
selecting a target physical uplink shared channel, PUSCH, resource element from a plurality of PUSCH resource elements of a PUSCH resource; and
using a transmission parameter corresponding to the target PUSCH resource element as the target transmission parameter; wherein
the plurality of PUSCH resource elements correspond to a plurality of transmission parameter;
and sending (S104) a random access message according to the target transmission parameter on the target PUSCH resource element.

2. The method according to claim 1, wherein before the selecting (S102) a target transmission parameter from a plurality of transmission parameters, the method further comprises:
receiving configuration information; wherein
the configuration information is used to indicate transmission parameters corresponding to the plurality of PUSCH resources.

3. The method according to claim 1, wherein a transmission parameter corresponding to each of the plurality of PUSCH resources comprises at least one of:
an RV or an RV sequence of a PUSCH;
a number of repetitions of a PUSCH; and
a number of repetitions of a random access preamble corresponding to a PUSCH.

4. The method according to claim 1, wherein among the plurality of PUSCH resources, physical random access channel, PRACH, resources corresponding to any two PUSCH resources are different.

5. The method according to claim 4, wherein a PRACH resource comprises at least one of a preamble resource and a physical random access channel occasion.

6. The method according to claim 1, wherein before the selecting (S102) a target transmission parameter from a plurality of transmission parameters, the method further comprises:
receiving configuration information; wherein
the configuration information is used to indicate transmission parameters corresponding to the plurality of PUSCH resource elements.

7. The method according to claim 1, wherein a transmission parameter corresponding to each of the plurality of PUSCH resource elements comprises at least one of:
an RV or an RV sequence of a PUSCH;
a number of repetitions of a PUSCH; and
a number of repetitions of a random access preamble corresponding to a PUSCH;
and/or
transmission parameters corresponding to any two of the plurality of PUSCH resource elements are different; and/or
one of the plurality of PUSCH resource elements corresponds to at least one physical random access channel, PRACH, resource.

8. The method according to any one of claims 1 to 7, wherein the selecting (S102) a target transmission parameter from a plurality of transmission parameters comprises:
selecting the target transmission parameter from the plurality of transmission parameters according to at least one of:
a user capability;
a path loss;
transmit power;
a size of a transport block to be carried;
a priority or a type of content to be carried; and
a next available PUSCH resource.

9. The method according to any one of claims 1 to 7, wherein before the selecting (S102) a target transmission parameter from a plurality of transmission parameters, the method further comprises:
receiving a physical downlink control channel, PDCCH, wherein the PDCCH comprises indication information; wherein
the selecting a target transmission parameter from a plurality of transmission parameters comprises: selecting the target transmission parameter from the plurality of transmission parameters according to the indication information.

10. A random access message transmission method, wherein the method is performed by a network device, and the method comprises:
receiving (S502) a random access message; wherein
the random access message is sent by a terminal device according to a target transmission parameter, the target transmission parameter is selected by the terminal device from a plurality of transmission parameters;
wherein the target transmission parameter comprises at least one of a redundancy version, RV, an RV sequence, and a number of repetitions; wherein
the target transmission parameter is a transmission parameter corresponding to a target physical uplink shared channel, PUSCH, resource selected by the terminal device from a plurality of PUSCH resources; wherein the plurality of PUSCH resources correspond to a plurality of transmission parameters; wherein the random access message is received on the target PUSCH resource;
or
the target transmission parameter is a transmission parameter corresponding to a target physical uplink shared channel, PUSCH, resource element selected by the terminal device from a plurality of PUSCH resource elements of a PUSCH resource; wherein the plurality of PUSCH resource elements correspond to a plurality of transmission parameters; wherein the random access message is received on the target PUSCH resource element.

11. A terminal device (600), comprising:
a transmission parameter selection module (602), configured to select a target transmission parameter from a plurality of transmission parameters; and
a sending module (604), configured to send a random access message according to the target transmission parameter;
wherein the target transmission parameter comprises at least one of a redundancy version, RV, an RV sequence, and a number of repetitions; wherein
the transmission parameter selection module (602) is specifically configured to select a target physical uplink shared channel, PUSCH, resource from a plurality of PUSCH resources; and use a transmission parameter corresponding to the target PUSCH resource as the target transmission parameter; wherein the plurality of PUSCH resources correspond to a plurality of transmission parameters; wherein the sending module is configured to send the random access message on the target PUSCH resource;
or
the transmission parameter selection module (602) is specifically configured to select a target physical uplink shared channel, PUSCH, resource element from a plurality of PUSCH resource elements of a PUSCH resource; and use a transmission parameter corresponding to the target PUSCH resource element as the target transmission parameter; wherein the plurality of PUSCH resource elements correspond to a plurality of transmission parameters, wherein the sending module is configured to send the random access message on the target PUSCH resource element.

12. A network device (700), comprising:
a receiving module (702), configured to receive a random access message; wherein
the random access message is sent by a terminal device (600) according to a target transmission parameter, the target transmission parameter is selected by the terminal device (600) from a plurality of transmission parameters;
wherein the target transmission parameter comprises at least one of a redundancy version, RV, an RV sequence, and a number of repetitions; wherein
the target transmission parameter is a transmission parameter corresponding to a target physical uplink shared channel, PUSCH, resource selected by the terminal device from a plurality of PUSCH resources; wherein the plurality of PUSCH resources correspond to a plurality of transmission parameters; wherein the reveiving module is configured to receive the random access message on the target PUSCH resource;
or
the target transmission parameter is a transmission parameter corresponding to a target physical uplink shared channel, PUSCH, resource element selected by the terminal device from a plurality of PUSCH resource elements of a PUSCH resource; wherein the plurality of PUSCH resource elements correspond to a plurality of transmission parameter, wherein the receiving module is configured to receive the random access message on the target PUSCH resource element.

## Patentansprüche

1. Verfahren zur Direktzugriffsnachrichtenübertragung, wobei das Verfahren von einer Endgerätevorrichtung ausgeführt wird, und das Verfahren umfasst:
Auswählen (S102) eines Zielübertragungsparameters aus einer Vielzahl von Übertragungsparametern;
wobei
der Zielübertragungsparameter mindestens eines von einer Redundanzversion, RV, einer RV-Sequenz und einer Anzahl von Wiederholungen umfasst; wobei
das Auswählen (S102) eines Zielübertragungsparameters aus einer Mehrzahl von Übertragungsparametern umfasst:
Auswählen einer Physical Uplink Shared Channel, PUSCH, Zielressource aus einer Mehrzahl von PUSCH-Ressourcen; und
Verwenden eines Übertragungsparameters, der der PUSCH Zielressource entspricht, als Zielübertragungsparameter; wobei
die Mehrzahl von PUSCH-Ressourcen einer Mehrzahl von Übertragungsparametern entspricht;
und Senden (S104) einer Direktzugriffsnachricht nach dem Zielübertragungsparameter auf der PUSCH Zielressource;
oder
Auswählen eines Physical Uplink Shared Channel, PUSCH, Zielressourcenelements aus einer Mehrzahl von PUSCH Ressourcenelementen einer PUSCH-Ressource; und
Verwenden eines Übertragungsparameters, der dem PUSCH Zielressourcenelement entspricht, als Zielübertragungsparameter; wobei
die Mehrzahl von PUSCH Ressourcenelementen einer Mehrzahl von Übertragungsparametern entspricht;
und Senden (S104) einer Direktzugriffsnachricht nach dem Zielübertragungsparameter auf dem PUSCH Zielressourcenelement.

2. Verfahren nach Anspruch 1, wobei das Verfahren, vor dem Auswählen (S102) eines Zielübertragungsparameters aus einer Mehrzahl von Übertragungsparametern, ferner umfasst:
Empfangen Konfigurationsinformationen; wobei
die Konfigurationsinformationen verwendet werden, um Übertragungsparameter anzuzeigen, die der Mehrzahl von PUSCH Ressourcen entsprechen.

3. Verfahren nach Anspruch 1, wobei ein Übertragungsparameter, der jeder der Mehrzahl von PUSCH-Ressourcen entspricht mindestens eines der folgenden umfasst:
eine RV oder eine RV-Sequenz eines PUSCH;
eine Anzahl von Wiederholungen eines PUSCH; und
eine Anzahl von Wiederholungen einer Direktzugriffspräambel, die einem PUSCH entspricht.

4. Verfahren nach Anspruch 1, wobei unter der Mehrzahl von PUSCH-Ressourcen, Physical Random Access Channel, PRACH, Ressourcen, die zwei beliebigen PUSCH-Ressourcen entsprechen, verschieden sind.

5. Verfahren nach Anspruch 4, wobei eine PRACH Ressource mindestens eines zwischen einer Präambelressource und einer Physical Random Access Channel-Gelegenheit umfasst.

6. Verfahren nach Anspruch 1, wobei das Verfahren, vor dem Auswählen (S102) eines Zielübertragungsparameters aus einer Mehrzahl von Übertragungsparametern, ferner umfasst:
Empfangen Konfigurationsinformationen; wobei
die Konfigurationsinformationen verwendet werden, um Übertragungsparameter anzuzeigen, die der Mehrzahl von PUSCH Ressourcenelementen entsprechen.

7. Verfahren nach Anspruch 1, wobei ein Übertragungsparameter, der jedem der Mehrzahl von PUSCH Ressourcenelementen entspricht mindestens eines der folgenden umfasst:
eine RV oder eine RV-Sequenz eines PUSCH;
eine Anzahl von Wiederholungen eines PUSCH; und
eine Anzahl von Wiederholungen einer Direktzugriffspräambel, die einem PUSCH entspricht; und/oder
Übertragungsparameter, die zwei beliebigen der Mehrzahl von PUSCH-Ressourcenelementen entsprechen, verschieden sind; und/oder
eines der Mehrzahl von PUSCH Ressourcenelementen mindestens einer Physical Random Access Channel, PRACH,-Ressource entspricht.

8. Verfahren nach einem der Ansprüche 1 bis 7, wobei das Auswählen (S102) eines Zielübertragungsparameters aus einer Mehrzahl von Übertragungsparametern umfasst:
Auswählen des Zielübertragungsparameters aus der Mehrzahl von Übertragungsparametern nach mindestens einem der folgenden:
einer Benutzerfähigkeit;
einem Pfadverlust;
einer Sendeleistung;
einer Größe eines zu tragenden Transportblocks;
einer Priorität oder einem Typ von zu tragendem Inhalt; und
einer nächsten verfügbaren PUSCH Ressource.

9. Verfahren nach einem der Ansprüche 1 bis 7, wobei das Verfahren, vor dem Auswählen (S102) eines Zielübertragungsparameters aus einer Mehrzahl von Übertragungsparametern, ferner umfasst:
Empfangen eines Physical Downlink Control Channel, PDCCH, wobei der PDCCH Anzeigeinformationen umfasst; wobei
das Auswählen eines Zielübertragungsparameters aus einer Mehrzahl von Übertragungsparametern umfasst: Auswählen des Zielübertragungsparameters aus der Mehrzahl von Übertragungsparametern nach den Anzeigeinformationen.

10. Verfahren zur Direktzugriffsnachrichtenübertragung, wobei das Verfahren von einer Netzwerkvorrichtung ausgeführt wird, und das Verfahren umfasst:
Empfangen (S502) einer Direktzugriffsnachricht; wobei
die Direktzugriffsnachricht von einer Endgerätevorrichtung nach einem Zielübertragungsparameter gesendet wird, wobei der Zielübertragungsparameter von der Endgerätevorrichtung aus einer Mehrzahl von Übertragungsparametern ausgewählt wird;
wobei
der Zielübertragungsparameter mindestens eines von einer Redundanzversion, RV, einer RV-Sequenz und einer Anzahl von Wiederholungen umfasst; wobei
der Zielübertragungsparameter ein Übertragungsparameter ist, der einer Physical Uplink Shared Channel, PUSCH, Zielressource entspricht, die von der Endgerätevorrichtung aus einer Mehrzahl von PUSCH Ressourcen ausgewählt wird; wobei die Mehrzahl von PUSCH Ressourcen einer Mehrzahl von Übertragungsparametern entspricht; wobei die Direktzugriffsnachricht auf der PUSCH Zielressource empfangen wird;
oder
der Zielübertragungsparameter ein Übertragungsparameter ist, der einem Physical Uplink Shared Channel, PUSCH, Zielressourcenelement entspricht, das von der Endgerätevorrichtung aus einer Mehrzahl von PUSCH-Ressourcenelementen einer PUSCH-Ressource ausgewählt wird; wobei die Mehrzahl von PUSCH-Ressourcenelementen einer Mehrzahl von Übertragungsparametern entspricht; wobei die Direktzugriffsnachricht auf dem PUSCH Zielressourcenelement empfangen wird.

11. Endgerätevorrichtung (600), umfassend:
ein Übertragungsparameter-Auswahlmodul (602), das dazu konfiguriert ist, einen Zielübertragungsparameter aus einer Mehrzahl von Übertragungsparametern auszuwählen; und
ein Sendemodul (604), das dazu konfiguriert ist, eine Direktzugriffsnachricht nach dem Zielübertragungsparameter zu senden;
wobei
der Zielübertragungsparameter mindestens eines von einer Redundanzversion, RV, einer RV-Sequenz und einer Anzahl von Wiederholungen umfasst; wobei
das Übertragungsparameter-Auswahlmodul (602) spezifisch dazu konfiguriert ist, eine Physical Uplink Shared Channel, PUSCH, Zielressource aus einer Mehrzahl von PUSCH-Ressourcen auszuwählen; und einen Übertragungsparameter, der der PUSCH Zielressource entspricht als Zielübertragungsparameter zu verwenden; wobei die Mehrzahl von PUSCH-Ressourcen einer Mehrzahl von Übertragungsparametern entspricht; wobei das Sendemodul dazu konfiguriert ist, die Direktzugriffsnachricht auf der PUSCH Zielressource zu senden;
oder
das Übertragungsparameter-Auswahlmodul (602) spezifisch dazu konfiguriert ist, ein Physical Uplink Shared Channel, PUSCH, Zielressourcenelement aus einer Mehrzahl von PUSCH-Ressourcenelementen einer PUSCH-Ressource auszuwählen; und einen Übertragungsparameter, der dem PUSCH Zielressourcenelement entspricht als Zielübertragungsparameter zu verwenden; wobei die Mehrzahl von PUSCH-Ressourcenelementen einer Mehrzahl von Übertragungsparametern entspricht; wobei das Sendemodul dazu konfiguriert ist, die Direktzugriffsnachricht auf dem PUSCH Zielressourcenelement zu senden.

12. Netzwerkvorrichtung (700), umfassend:
ein Empfangsmodul (702), das dazu konfiguriert ist, eine Direktzugriffsnachricht zu empfangen; wobei die Direktzugriffsnachricht von einer Endgerätevorrichtung (600) nach einem Zielübertragungsparameter gesendet wird, wobei der Zielübertragungsparameter von der Endgerätevorrichtung (600) aus einer Mehrzahl von Übertragungsparametern ausgewählt wird;
wobei
der Zielübertragungsparameter mindestens eines von einer Redundanzversion, RV, einer RV-Sequenz und einer Anzahl von Wiederholungen umfasst; wobei
der Zielübertragungsparameter ein Übertragungsparameter ist, der einer Physical Uplink Shared Channel, PUSCH, Zielressource entspricht, die von der Endgerätevorrichtung aus einer Mehrzahl von PUSCH-Ressourcen ausgewählt wird; wobei die Mehrzahl von PUSCH-Ressourcen einer Mehrzahl von Übertragungsparametern entspricht; wobei das Empfangsmodul dazu konfiguriert ist, die Direktzugriffsnachricht auf der PUSCH Zielressource zu empfangen;
oder
der Zielübertragungsparameter ein Übertragunsparameter ist, der einem Physical Uplink Shared Channel, PUSCH, Zielressourcenelement entspricht, das von der Endgerätevorrichtung aus einer Mehrzahl von PUSCH Ressourcenelementen einer PUSCH-Ressource ausgewählt wird; wobei die Mehrzahl von PUSCH Ressourcenelementen einer Mehrzahl von Übertragungsparametern entspricht; wobei das Empfangsmodul dazu konfiguriert ist, die Direktzugriffsnachricht auf dem PUSCH Zielressourcenelement der zu empfangen.

## Revendications

1. Procédé de transmission de message d'accès aléatoire, dans lequel le procédé est exécuté par un dispositif terminal, et le procédé comprend :
la sélection (S102) d'un paramètre de transmission cible parmi une pluralité de paramètres de transmission ;
dans lequel
le paramètre de transmission cible comprend au moins l'un parmi une version de redondance, RV, une séquence RV, et un nombre de répétitions ;
dans lequel
la sélection (S102) d'un paramètre de transmission cible parmi une pluralité de paramètres de transmission comprend :
la sélection d'une ressource cible de canal physique partagé de liaison montante, PUSCH, parmi une pluralité de ressources PUSCH ; et
l'utilisation d'un paramètre de transmission correspondant à la ressource PUSCH cible comme paramètre de transmission cible ; dans lequel
la pluralité de ressources PUSCH correspond à une pluralité de paramètres de transmission ;
et l'envoi (S104) d'un message d'accès aléatoire selon le paramètre de transmission cible sur la ressource PUSCH cible ;
ou
la sélection d'un élément de ressource cible de canal physique partagé de liaison montante, PUSCH, parmi une pluralité d'éléments de ressource PUSCH d'une ressource PUSCH ; et
l'utilisation d'un paramètre de transmission correspondant à l'élément de ressource PUSCH cible comme paramètre de transmission cible ; dans lequel
la pluralité d'éléments de ressource PUSCH correspond à une pluralité de paramètres de transmission ; et l'envoi d'un message d'accès aléatoire selon le paramètre de transmission cible sur l'élément de ressource PUSCH cible.

2. Procédé selon la revendication 1, dans lequel avant la sélection (S102) d'un paramètre de transmission cible parmi une pluralité de paramètres de transmission, le procédé comprend en outre :
la réception d'informations de configuration ; dans lequel
les informations de configuration sont utilisées pour indiquer des paramètres de transmission correspondant à la pluralité de ressources PUSCH.

3. Procédé selon la revendication 1, dans lequel un paramètre de transmission correspondant à chacune de la pluralité de ressources PUSCH comprend au moins l'un parmi:
une RV ou une séquence RV d'un PUSCH ;
un nombre de répétitions d'un PUSCH ; et
un nombre de répétitions d'un préambule d'accès aléatoire correspondant à un PUSCH.

4. Procédé selon la revendication 1, dans lequel parmi la pluralité de ressources PUSCH, les ressources de canal physique d'accès aléatoire, PRACH, correspondant à deux quelconques ressources PUSCH sont différentes.

5. Procédé selon la revendication 4, dans lequel une ressource PRACH comprend au moins l'un parmi une ressource de préambule et une occasion de canal physique d'accès aléatoire.

6. Procédé selon la revendication 1, dans lequel avant la sélection (S102) d'un paramètre de transmission cible parmi une pluralité de paramètres de transmission, le procédé comprend en outre :
la réception d'informations de configuration ; dans lequel
les informations de configuration sont utilisées pour indiquer des paramètres de transmission correspondant à la pluralité d'éléments de ressource PUSCH.

7. Procédé selon la revendication 1, dans lequel un paramètre de transmission correspondant à chacun de la pluralité d'éléments de ressource PUSCH comprend au moins l'un parmi :
une RV ou une séquence RV d'un PUSCH ;
un nombre de répétitions d'un PUSCH ; et
un nombre de répétitions d'un préambule d'accès aléatoire correspondant à un PUSCH ; et/ou
des paramètres de transmission correspondant à deux quelconques de la pluralité d'éléments de ressource PUSCH sont différents ; et/ou
l'un de la pluralité d'éléments de ressource PUSCH correspond à au moins une ressource de canal physique d'accès aléatoire, PRACH.

8. Procédé selon l'une quelconque des revendications 1 à 7, dans lequel la sélection (S102) d'un paramètre de transmission cible parmi une pluralité de paramètres de transmission comprend : la sélection du paramètre de transmission cible parmi la pluralité de paramètres de transmission selon au moins l'un parmi :
une capacité d'utilisateur ;
une perte de trajet ;
une puissance d'émission ;
une taille d'un bloc de transport à transporter ;
une priorité ou un type de contenu à transporter ; et
une prochaine ressource PUSCH disponible.

9. Procédé selon l'une quelconque des revendications 1 à 7, dans lequel avant la sélection (S102) d'un paramètre de transmission cible parmi une pluralité de paramètres de transmission, le procédé comprend en outre :
la réception d'un canal physique de contrôle de liaison descendante, PDCCH, dans lequel le PDCCH comprend des informations d'indication ; dans lequel
la sélection d'un paramètre de transmission cible parmi une pluralité de paramètres de transmission comprend : la sélection du paramètre de transmission cible parmi la pluralité de paramètres de transmission selon les informations d'indication.

10. Procédé de transmission de message d'accès aléatoire, dans lequel le procédé est exécuté par un dispositif de réseau, et le procédé comprend :
la réception (S502) d'un message d'accès aléatoire ; dans lequel
le message d'accès aléatoire est envoyé par un dispositif terminal selon un paramètre de transmission cible, le paramètre de transmission cible étant sélectionné par le dispositif terminal parmi une pluralité de paramètres de transmission ;
dans lequel
le paramètre de transmission cible comprend au moins l'un parmi une version de redondance, RV, une séquence RV, et un nombre de répétitions ; dans lequel
le paramètre de transmission cible est un paramètre de transmission correspondant à une ressource cible de canal physique partagé de liaison montante, PUSCH, sélectionnée par le dispositif terminal parmi une pluralité de ressources PUSCH ; dans lequel la pluralité de ressources PUSCH correspond à une pluralité de paramètres de transmission ; dans lequel le message d'accès aléatoire est reçu sur la ressource PUSCH cible ;
ou
le paramètre de transmission cible est un paramètre de transmission correspondant à un élément de ressource cible de canal physique partagé de liaison montante, PUSCH, sélectionné par le dispositif terminal parmi une pluralité d'éléments de ressource PUSCH d'une ressource PUSCH ;
dans lequel la pluralité d'éléments de ressource PUSCH correspond à une pluralité de paramètres de transmission ; dans lequel le message d'accès aléatoire est reçu sur l'élément de ressource PUSCH cible.

11. Dispositif terminal (600), comprenant :
un module de sélection de paramètre de transmission (602), configuré pour sélectionner un paramètre de transmission cible parmi une pluralité de paramètres de transmission ; et
un module d'envoi (604), configuré pour envoyer un message d'accès aléatoire selon le paramètre de transmission cible ; dans lequel
le paramètre de transmission cible comprend au moins l'un parmi une version de redondance, RV, une séquence RV, et un nombre de répétitions ; dans lequel
le module de sélection de paramètre de transmission (602) est spécifiquement configuré pour sélectionner une ressource cible de canal physique partagé de liaison montante, PUSCH, parmi une pluralité de ressources PUSCH ; et utiliser un paramètre de transmission correspondant à la ressource PUSCH cible comme paramètre de transmission cible ; dans lequel la pluralité de ressources PUSCH correspond à une pluralité de paramètres de transmission ; le module d'envoi étant configuré pour envoyer le message d'accès aléatoire sur la ressource PUSCH cible ;
ou
le module de sélection de paramètre de transmission (602) est spécifiquement configuré pour sélectionner un élément de ressource cible de canal physique partagé de liaison montante, PUSCH, parmi une pluralité d'éléments de ressource PUSCH d'une ressource PUSCH ; et utiliser un paramètre de transmission correspondant à l'élément de ressource PUSCH cible comme paramètre de transmission cible ; dans lequel la pluralité d'éléments de ressource PUSCH correspond à une pluralité de paramètres de transmission ; le module d'envoi étant configuré pour envoyer le message d'accès aléatoire sur l'élément de ressource PUSCH cible.

12. Dispositif de réseau (700), comprenant :
un module de réception (702), configuré pour recevoir un message d'accès aléatoire;
dans lequel le message d'accès aléatoire est envoyé par un dispositif terminal (600) selon un paramètre de transmission cible, le paramètre de transmission cible étant sélectionné par le dispositif terminal (600) parmi une pluralité de paramètres de transmission ; dans lequel
le paramètre de transmission cible comprend au moins l'un parmi une version de redondance, RV, une séquence RV, et un nombre de répétitions ;
dans lequel
le paramètre de transmission cible est un paramètre de transmission correspondant à une ressource cible de canal physique partagé de liaison montante, PUSCH, sélectionnée par le dispositif terminal parmi une pluralité de ressources PUSCH ; dans lequel la pluralité de ressources PUSCH correspond à une pluralité de paramètres de transmission ; le module de réception étant configuré pour recevoir le message d'accès aléatoire sur la ressource PUSCH cible ;
ou
le paramètre de transmission cible est un paramètre de transmission correspondant à un élément de ressource cible de canal physique partagé de liaison montante, PUSCH, sélectionné par le dispositif terminal parmi une pluralité d'éléments de ressource PUSCH d'une ressource PUSCH ; dans lequel la pluralité d'éléments de ressource PUSCH correspond à une pluralité de paramètres de transmission ; le module de réception étant configuré pour recevoir le message d'accès aléatoire sur l'élément de ressource PUSCH cible.
